(19) Europäisches Patentamt
European Patent Office
Office européen des brevets

(11) **EP 3 462 520 A1**

(12) **EUROPEAN PATENT APPLICATION**

(43) Date of publication:
**03.04.2019 Bulletin 2019/14**

(21) Application number: **18196866.0**

(22) Date of filing: **26.09.2018**

(51) Int Cl.:
*H01M 4/04* (2006.01)     *H01M 4/134* (2010.01)
*H01M 4/1395* (2010.01)     *H01M 4/36* (2006.01)
*H01M 4/52* (2010.01)     *H01M 4/583* (2010.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2017  TW 10633111**

(71) Applicant: **Industrial Technology Research
Institute
31040 Hsinchu (TW)**

(72) Inventors:
• **Chen, Kuang-Yao
973 Ji'an Township, Hualien County (TW)**

• **Huang, Ting-Wei
300 Hsinchu City (TW)**
• **Chiang, Chien-Chih
247 New Taipei City (TW)**
• **Wu, Chun-Hsing
106 Da'an Dist., Taipei City (TW)**
• **Chang, Wen-Sheng
900 Pingtung City, Pingtung County (TW)**
• **Yang, Chang-Chung
114 Neihu Dist., Taipei City (TW)**

(74) Representative: **Michalski Hüttermann & Partner
Patentanwälte mbB
Speditionstraße 21
40221 Düsseldorf (DE)**

(54) **ELECTRODE AND DEVICE EMPLOYING THE SAME**

(57)     An electrode and a device employing the same are provided. The electrode can include a metal network structure, and a hollow active material network structure. In particularly, the metal network structure is disposed in the hollow active material network structure. The weight ratio of the metal network structure to the hollow active material network structure is from 0.5 to 155.

FIG. 2

EP 3 462 520 A1

**Description**

**CROSS REFERENCE TO RELATED APPLICATIONS**

This Application claims priority of Taiwan Patent Application No. 106133111, filed on Sep. 27, 2017, the entirety of which is incorporated by reference herein.

**TECHNICAL FIELD**

The technical field relates to an electrode and a device employing the same.

**BACKGROUND**

Aluminum is the most abundant metal on earth, and electronic devices that are based on aluminum have the advantage of being inexpensive to produce. An aluminum-based redox couple provides storage capacity that is competitive with that of a single-electron lithium-ion battery. Furthermore, aluminum has low flammability and low electronic redox properties, meaning that an aluminum-ion battery might offer significant safety improvements.

Given the enhanced theoretical capacity of an aluminum-ion battery, it would be desirable to provide aluminum-ion battery constructions that may feasibly and reliably provide enhanced battery performance, such as enhanced capacity and discharge voltage.

The capacity of an aluminum-ion battery is proportional to the amount of graphite in the aluminum-ion battery. The conventional aluminum-ion battery, employed the foamed graphite as an electrode, exhibits poor performance thereof due to the disadvantages of poor contact at current collector of the foamed graphite and poor electrical conductivity at high charging/discharging current. In addition, due to the fragility of the pure foamed graphite is brittle, the foamed graphite is difficult to process.

Hence, it is against this background that a need arose to develop embodiments of this disclosure.

**SUMMARY**

According to embodiments of the disclosure, the disclosure provides an electrode, such as the positive electrode of the metal-ion battery. The electrode includes a metal network structure; and an active material network structure, wherein the metal network structure is disposed in the hollow active material network structure, wherein the weight ratio of the metal network structure and the hollow active material network structure is from 0.5 to 155.

According to other embodiments of the disclosure, the disclosure provides a method for fabricating an electrode. The method includes providing a metal network structure, and depositing an active material on the surface of the metal network structure, obtaining the electrode. The weight ratio of the metal network structure and the hollow active material network structure is from 0.5 to 155.

According to other embodiments of the disclosure, the disclosure provides a device, such as metal-ion battery, or capacitor. The device includes a first electrode, wherein the first electrode is the electrode of the disclosure; a first separator; and, a second electrode, wherein the first electrode is separated from the second electrode by the first separator.

A detailed description is given in the following embodiments with reference to the accompanying drawings.

**BRIEF DESCRIPTION OF THE DRAWINGS**

FIG. 1 is a schematic view of the electrode according to an embodiment of the disclosure.
FIG. 2 is a perspective schematic view of the region 2 of the electrode shown in FIG. 1.
FIGs. 3 and 4 are schematic views of the electrodes according to other embodiments of the disclosure.
FIG. 5 is a flow chart illustrating a method for fabricating the electrode according to an embodiment of the disclosure.
FIG. 6 is a schematic view of the device according to an embodiment of the disclosure.
FIG. 7 is a graph showing the results of cycling stability tests of the aluminum-ion batteries according to Examples 1-5 and Comparative Example 1 of the disclosure.
FIG. 8 is a graph showing the results of cycling stability tests of the aluminum-ion batteries according to Examples 6-9 of the disclosure.
FIG. 9 is a graph showing the results of cycling stability tests of the aluminum-ion batteries according to Examples 10-13 of the disclosure.

FIG. 10 is a graph showing the results of cycling stability tests of the aluminum-ion batteries according to Examples 14-17 of the disclosure.

FIG. 11 is a graph showing the results of cycling stability test of the aluminum-ion battery according to Example 18 of the disclosure.

FIG. 12 is a graph showing the results of cycling stability tests of the aluminum-ion batteries according to Examples 19 and 20 of the disclosure.

**DETAILED DESCRIPTION**

According to embodiments of the disclosure, the disclosure provides an electrode (such as a positive electrode of a metal-ion battery) and a device (such as a metal-ion battery employing the electrode). The electrode has an active material network structure by depositing an active material on the surface of a metal network structure. Since the metal material is disposed in the active material network structure, the electrical conductivity of the electrode can be enhanced and the flexibility of the active material network structure can be improved. In addition, the metal network structure can be subjected to an etching, to remove a part of the metal in the active material network structure, forming a plurality of voids in the active material network structure. As a result, the active material of the battery may be able to be infiltrated rapidly by the electrolyte, thereby increasing the capacity and the total capacity generation of the battery. In addition, the active material network structure covering the surface of the metal network structure can be non-continuous in order to improve the diffusion of the electrolyte.

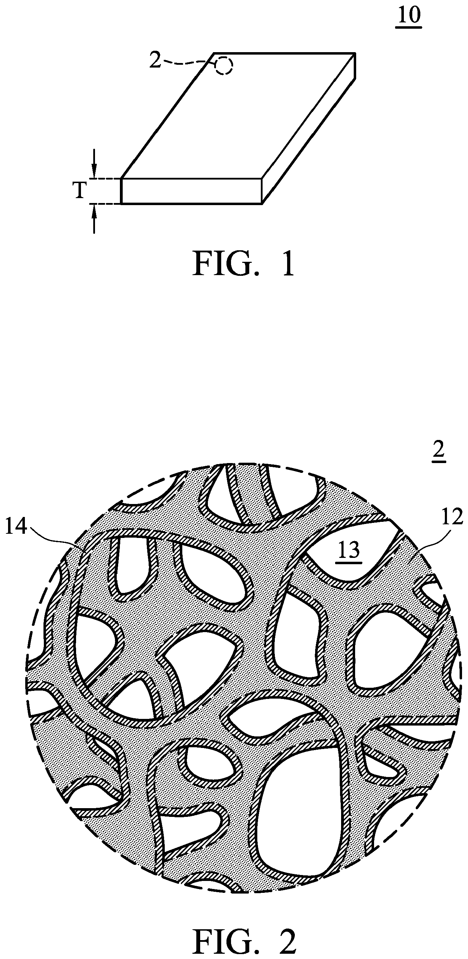

FIG. 1 is a schematic view of the electrode 10 according to an embodiment of the disclosure. The thickness T of the electrode 10 can be from about 100nm to 10mm. FIG. 2 is a perspective schematic view of the region 2 of the electrode shown in FIG. 1. As show in FIG. 2, the electrode 10 includes a metal network structure 12, and an hallow active material network structure 14, wherein the metal network structure 12 is disposed in the hollow active material network structure 14. Namely, the hollow active material network structure 14 covers the metal network structure 12. As show in FIG. 2, since the metal network structure 12 has a sponge-like configuration, the hollow active material network structure 14, which covers the metal network structure 12, can also have a sponge-like configuration. As a result, a plurality of holes 13 is three-dimensionally distributed around the hallow active material network structure 14. In addition, the weight ratio of the metal network structure to the hollow active material network structure can be from about 0.5 to 155, such as from 1.6 to 155.

According to embodiments of the disclosure, the metal network structure 12can be made of a metal foam, such a nickel foam, iron foam, copper foam, titanium foam, or alloy foam (such as: nickel-containing alloy, iron-containing alloy, copper-containing alloy, or titanium-containing alloy). According to embodiments of the disclosure, the metal network structure 12 can be nickel foam, nickel foam alloy, or stainless steel foam.

According to embodiments of the disclosure, the hollow active material network structure can be layered active layer, or an agglomeration of a layered active layer. For example, the hollow active material network structure can be graphite, layered double hydroxide, layered oxide, layered chalcogenide, or a combination thereof. According to some embodiments of the disclosure, the amount of active material of the hollow active material network structure can be from 0.2 mg/cm$^2$ to 20 mg/cm$^2$.

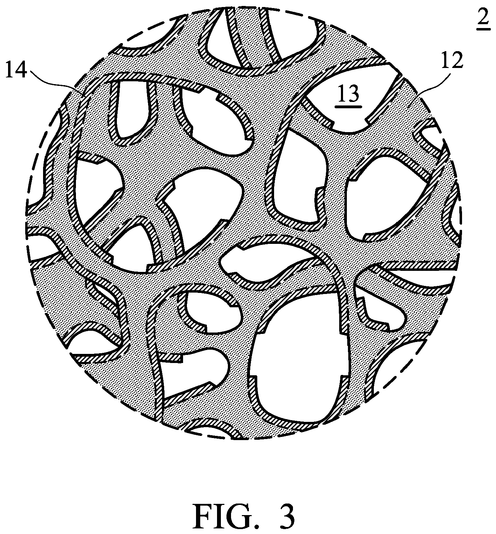

According to embodiments of the disclosure, the hollow active material network structure 14 can be a continuous structure, as shown in FIG. 2. According to some embodiments of the disclosure, as show in FIG. 3, the hollow active material network structure 14 can be a non-continuous structure, and thus a part of the surface of the metal network structure 12 is exposed. When the hollow active material network structure 14 is a non-continuous structure, the area ratio of the surface, which is covered by the hollow active material network structure, of the metal network structure to the whole surface of the metal network structure is 0.01 to 0.95, in order to facilitate the infiltration of electrolyte into the hollow active material network structure 14.

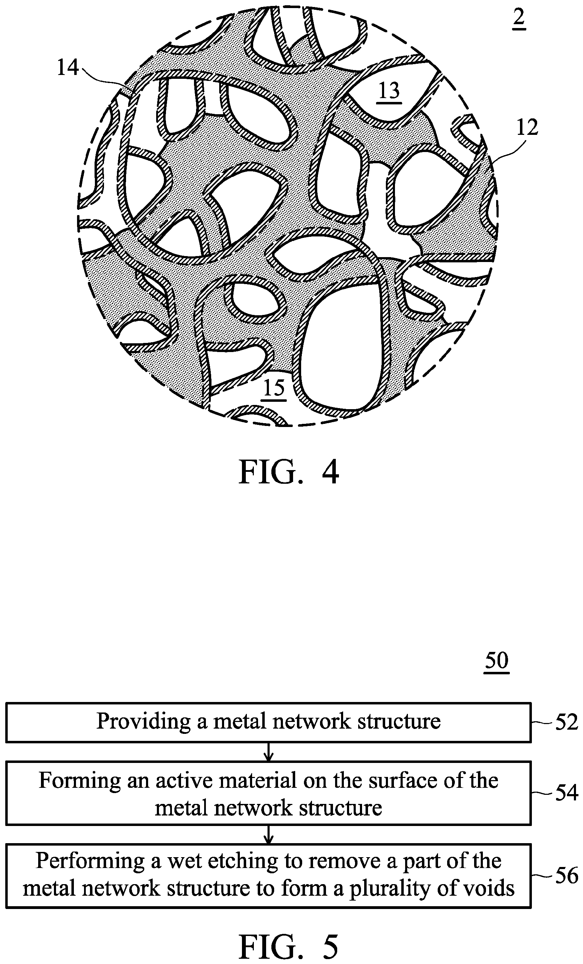

According to embodiments of the disclosure, a part of the metal network structure 12 can be removed, thereby forming a plurality of voids 15 disposed in the hollow active material network structure 14, as shown in FIG. 4.

According to embodiments of the disclosure, the volume ratio of the voids to the metal network structure is from 99 to 1. As a result, the active material of the battery may be able to be infiltrated rapidly by the electrolyte through the voids, thereby increasing the capacity and the total capacity generation of the battery.

The volume ratio of the voids to the metal network structure can be determined by measuring the weight of the metal network structure before and after etching. For example, the metal network structure can have a weight W0 before etching, and the metal network structure can have a weight W1 after etching. The volume ratio Rv of the voids to the metal network structure can be determined using the following equation:

$$Rv = (W0-W1)/W1$$

According to embodiments of the disclosure, the disclosure also provides a method for fabricating the aforementioned electrode. FIG. 5 is a flow chart illustrating a method for fabricating the electrode according to an embodiment of the disclosure. It should be understood that additional steps can be provided before, during, and after the method 50, and some of the steps described can be replaced or eliminated for other embodiments of the method 50.

The initial step 52 of the method for fabricating the electrode provides a metal network structure. Next, an active material is formed on the surface of the metal network structure through a depositing process (such as chemical vapor deposition (CVD)), obtaining the electrode (steps 54). According to embodiments of the disclosure, the depositing process can be performed in a vacuum muffle furnace to promote the growth of the active material network structure (the temperature of the depositing process can be from about 800°C to 1200°C). For example, when the hollow active material network structure is graphite, methane, served as reactive gas, can be introduced during the depositing process. Further, argon gas and hydrogen gas, served as carrier gas, can be introduced optionally during the depositing process. In the depositing process, the continuity of the active material network structure can be controlled by the process time period. For example, a continuous active material network structure can be formed by increasing the process time period, and a non-continuous active material network structure can be formed by reducing the process time period. According to embodiments of the disclosure, after performing the steps 54, the electrode can be further subjected to a wet etching process to remove a part of the metal network structure, forming a plurality of voids (steps 56). In general, when the weight per unit area of the active material is relative high (such as greater than 1.5 mg/cm$^2$), the metal network structure can be subjected to a wet etching process to from voids which facilitates the diffusion of the electrolyte. For example, when the metal network structure is a nickel foam, the electrode can be immersed into an etching solution, wherein the etching solution can include ferric chloride aqueous solution and hydrochloric acid. The etching degree of the metal network structure can be controlled by increasing or reducing the immersion time period. After etching, the result can be washed by deionized water to remove residual etching solution and then dried.

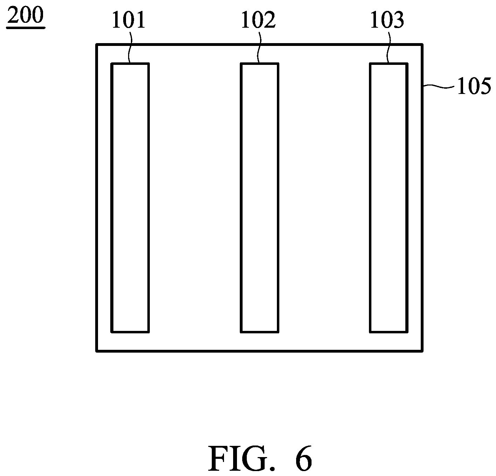

According to embodiments of the disclosure, the disclosure provides a device such as metal-ion battery, or capacitor. As shown in FIG. 6, the device 200 includes a first electrode 101 (serving as a positive electrode), a first separator 102, and a second electrode 103 (serving as a negative electrode), wherein the first electrode 101 is the aforementioned electrode of the disclosure, and the first separator 102 is disposed between the first electrode 101 and the second electrode 103. The device 200 also includes an electrolyte 105, which is disposed between the first electrode 101 and the second electrode 103. The device 200 can be a rechargeable secondary battery, although primary batteries also are encompassed by the disclosure.

According to other embodiments of the disclosure, the device 200 can further include a third electrode (serving as a negative electrode) and a second separator, wherein the second separator is disposed between the first electrode and the third electrode. The first electrode is disposed between the second electrode and the third electrode.

According to embodiments of the disclosure, the device 200 can be an aluminum-ion battery, although other types of metal ion batteries are encompassed by the disclosure. The second electrode 103 can include aluminum, such as a non-alloyed form of aluminum or an aluminum alloy. More generally, suitable materials for the second electrode 103 may include one or more of an alkali metal (e.g., lithium, potassium, sodium, and so forth), an alkaline earth metal (e.g., magnesium, calcium, and so forth), a transition metal (e.g., zinc, iron, nickel, cobalt, and so forth), a main group metal or metalloid (e.g., aluminum, silicon, tin, and so forth), and a metal alloy of two or more of the foregoing elements (e.g., an aluminum alloy).

The first separator 102 can mitigate against electrical shorting of the first electrode 101 and the second electrode 103. The electrolyte 105 can support reversible intercalation and de-intercalation of anions at the first electrode 101 and support reversible deposition and dissolution (or stripping) of the second electrode 103 (such as aluminum). According to embodiments of the disclosure, the electrolyte includes an ionic liquid. In addition, the electrolyte is a mixture of an ionic liquid and a metal halide. For example, the ionic liquid can be choline chloride, ethylchlorine chloride, alkali halide, alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof. The metal halide can be aluminum halide. The molar ratio of the metal halide and the ionic liquid is at least or greater than about 1.1 or at least or greater than about 1.2, and is up to about 1.5, up to about 1.8, or more, such as where the aluminum halide is $AlCl_3$, the ionic liquid is 1-ethyl- 3-methylimidazolium chloride, and the molar ratio of the aluminum chloride to 1-ethyl-3-methylimidazolium chloride is at least or greater than about 1.2, such as between 1.2 and 1.8. According to other embodiments of the disclosure, the electrolyte can be a mixture of a specific solvent and a metal halide, wherein the specific solvent can be urea, N-methylurea, dimethyl sulfoxide, methylsulfonylmethane, or a combination thereof. The molar ratio of the aluminum chloride to the solvent is greater than or equal to about 1.1, such as between 1.2 and 1.8. An ionic liquid electrolyte can be doped (or have additives added) to increase electrical conductivity and lower the viscosity, or can be otherwise altered to yield compositions that favor the reversible electrodeposition of metals.

Below, exemplary embodiments will be described in detail so as to be easily realized by a person having ordinary knowledge in the art. The inventive concept may be embodied in various forms without being limited to the exemplary embodiments set forth herein. Descriptions of well-known parts are omitted for clarity.

Example 1

First, a nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.78 mg/cm$^2$, and the weight ratio of the nickel to graphite was 10.3. Next, after cooling to room temperature, the nickel foam plate, which a graphite layer was grown thereon, was immersed into an etching solution (ferric chloride aqueous solution with a concentration of 5%) to etch the nickel foam plate in order to remove a part of nickel of the nickel foam plate to form voids. The time period of the etching process was controlled until the weight ratio of the nickel to graphite was 0.63. Finally, the result was washed with deionized water to remove the residual etching solution and then dried at 80°C to remove deionized water, obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride ($AlCl_3$) and 1-ethyl-3-methylimidazolium chloride ([EMIm]Cl, wherein the molar ratio between $AlCl_3$ and [EMIm] Cl was about 1.3) was injected into the aluminum plastic pouch, obtaining Aluminum-ion battery (1).

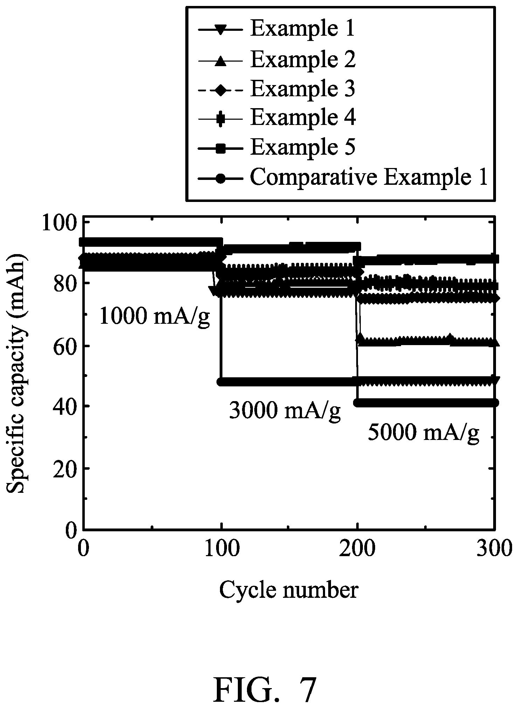

Next, Aluminum-ion battery (1) of Example 1 was analyzed at charging/discharging current densities of about 1000 mA/g, 3000mA/g, and 5000mA/g by a NEWARE battery analyzer to analyze the performance of Aluminum-ion battery (1). The results are shown in FIG. 7 and Table 1.

Example 2

Example 2 was performed in the same manner as Example 1 except that the weight ratio of the nickel to graphite was 1.32 after etching, obtaining Aluminum-ion battery (2).

Next, Aluminum-ion battery (2) of Example 2 was analyzed by a NEWARE battery analyzer to analyze the performance of Aluminum-ion battery (2). The results are shown in FIG. 7 and Table 1.

Example 3

Example 3 was performed in the same manner as Example 1 except that the weight ratio of the nickel to graphite was 1.63 after etching, obtaining Aluminum-ion battery (3).

Next, Aluminum-ion battery (3) of Example 3 was analyzed by a NEWARE battery analyzer to analyze the performance of Aluminum-ion battery (3). The results are shown in FIG. 7 and Table 1.

Example 4

Example 4 was performed in the same manner as Example 1 except that the weight ratio of the nickel to graphite was 2.66 after etching, obtaining Aluminum-ion battery (4).

Next, Aluminum-ion battery (4) of Example 4 was analyzed by a NEWARE battery analyzer to analyze the performance of Aluminum-ion battery (4). The results are shown in FIG. 7 and Table 1.

Example 5

Example 5 was performed in the same manner as Example 1 except that the weight ratio of the nickel to graphite was 4.99 after etching, obtaining Aluminum-ion battery (5).

Next, Aluminum-ion battery (5) of Example 5 was analyzed by a NEWARE battery analyzer to analyze the performance of Aluminum-ion battery (5). The results are shown in FIG. 7 and Table 1.

Comparative Example 1

Comparative Example 1 was performed in the same manner as Example 1 except that the nickel was removed completely (i.e. the weight ratio of the nickel to graphite was 0) after etching, obtaining Aluminum-ion battery (6).

Next, Aluminum-ion battery (6) of Comparative Example 1 was analyzed by a NEWARE battery analyzer to analyze the performance of Aluminum-ion battery (6). The results are shown in FIG. 7 and Table 1.

Example 6

Example 6 was performed in the same manner as Example 1 except that the weight ratio of the nickel to graphite was 5.7 after etching, obtaining Aluminum-ion battery (7).

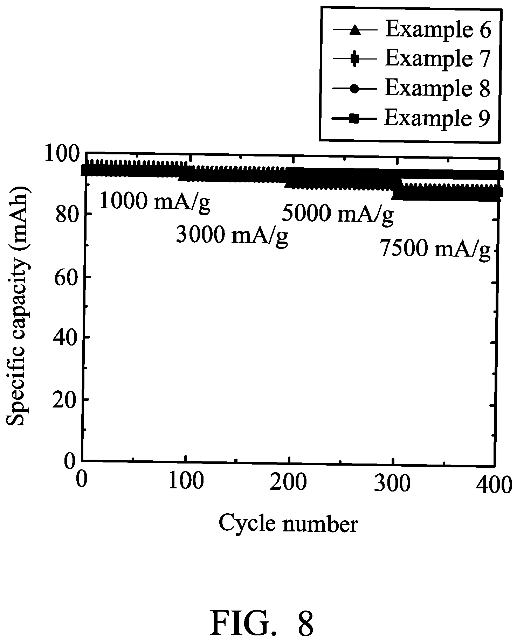

Next, Aluminum-ion battery (7) of Example 6 was analyzed by a NEWARE battery analyzer to analyze the performance of Aluminum-ion battery (7). The results are shown in FIG. 8 and Table 1.

Example 7

Example 7 was performed in the same manner as Example 1 except that the weight ratio of the nickel to graphite was 8.3 after etching, obtaining Aluminum-ion battery (8).

Next, Aluminum-ion battery (8) of Example 7 was analyzed by a NEWARE battery analyzer to analyze the performance of Aluminum-ion battery (8). The results are shown in FIG. 8 and Table 1.

Example 8

Example 8 was performed in the same manner as Example 1 except that the graphite amount per unit area was controlled to force the weight ratio of the nickel to graphite was 31 after etching, obtaining Aluminum-ion battery (9).

Next, Aluminum-ion battery (9) of Example 8 was analyzed by a NEWARE battery analyzer to analyze the performance of Aluminum-ion battery (9). The results are shown in FIG. 8 and Table 1.

Example 9

Example 9 was performed in the same manner as Example 1 except that the graphite amount per unit area was controlled to force the weight ratio of the nickel to graphite was 155 after etching, obtaining Aluminum-ion battery (10).

Next, Aluminum-ion battery (10) of Example 9 was analyzed by a NEWARE battery analyzer to analyze the performance of Aluminum-ion battery (10). The results are shown in FIG. 8 and Table 1.

Table 1

| | the weight ratio of the nickel to graphite | specific capacity difference (mAh/g) (charging/ discharging current density from 1000 mA/g to 3000 mA/g) | specific capacity difference (mAh/g) (charging/ discharging current density from 3000 mA/g to 5000 mA/g) | specific capacity (mAh/g) (charging/ discharging current density of 3000 mA/g) |
|---|---|---|---|---|
| Comparative Example 1 | 0 | 38 | 6 | 47 |
| Example 1 | 0.63 | 9 | 29 | 75 |
| Example 2 | 1.32 | 6 | 19 | 78 |
| Example 3 | 1.63 | 5 | 8 | 82 |
| Example 4 | 2.66 | 3 | 4 | 84 |
| Example 5 | 4.9 | 2 | 4 | 91 |
| Example 6 | 5.7 | 2 | 2 | 92 |
| Example 7 | 8.3 | 2 | 2 | 90 |
| Example 8 | 31 | 1 | 2 | 93 |
| Example 9 | 155 | 1 | -2 | 91 |

As shown in Table 1 and FIGs. 7 and 8, when there was no metal disposed in the graphite (i.e. the weight ratio of the nickel to graphite is 0 (Comparative Example 1)), the aluminum-ion battery exhibits a poor specific capacity at high charging/discharging density. In comparison with Examples 1-9, when the nickel foam was remained in the graphite, the performances of the batteries were enhanced obviously. In addition, when the weight ratio of the nickel to graphite is greater than or equal to 1.6, the specific capacity differences between various charging/discharging current densities are obviously convergent. It means that the residual nickel metal can enhance the electrical conductivity of the electrode, thereby resulting in that the graphite electrode of the disclosure exhibits high specific capacity at high charging/discharging current densities.

Example 10

First, a nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C), and methane was introduced into the vacuum muffle furnace with argon gas and hydrogen gas as carrier gas. The graphite amount per unit area was controlled to be about 2 mg/cm$^2$, and the weight ratio of the nickel to graphite was 8.9, obtaining the graphite electrode (no etching process was performed).

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride ($AlCl_3$) and 1-ethyl-3-methylimidazolium chloride ([EMIm]Cl, wherein the molar ratio between $AlCl_3$ and [EMIm] Cl was about 1.3) was injected into the aluminum plastic pouch, obtaining Aluminum-ion battery (11).

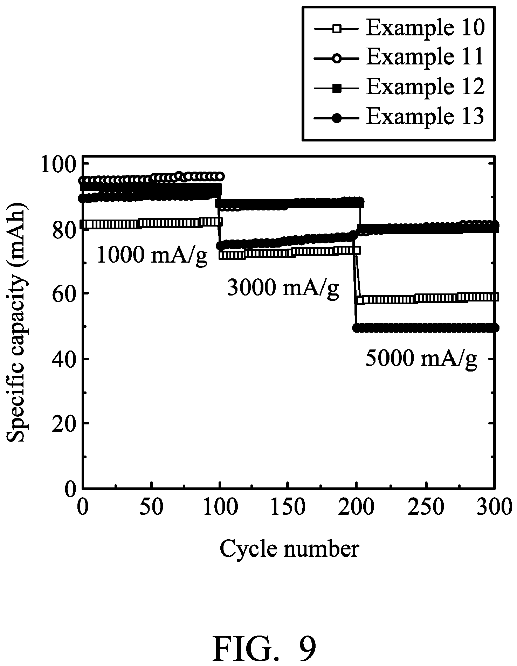

Next, Aluminum-ion battery (11) of Example 10 was analyzed at charging/discharging current densities of about 1000 mA/g, 3000mA/g, and 5000mA/g by a NEWARE battery analyzer to analyze the performance of Aluminum-ion battery (11). The results are shown in FIG. 9.

Example 11

A nickel foam plate (having a size of 70mm x 70mm, a thickness of 0.2mm, and a porosity of 90%) was provided. Next, the nickel foam plate was disposed into a vacuum muffle furnace, and methane was introduced into the vacuum muffle furnace with argon gas and hydrogen gas as carrier gas. The graphite amount per unit area was controlled to be about 2 mg/cm$^2$, and the weight ratio of the nickel to graphite was 7.78. Next, after etching the nickel foam plate which a graphite layer was grown thereon, the weight ratio of the nickel to graphite was reduced from 7.78to 4.67 (i.e. 40% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride ($AlCl_3$) and 1-ethyl-3-methylimidazolium chloride ([EMIm]Cl, wherein the molar ratio between $AlCl_3$ and [EMIm] Cl was about 1.3) was injected into the aluminum plastic pouch, obtaining Aluminum-ion battery (12).

Next, Aluminum-ion battery (12) of Example 11 was analyzed by a NEWARE battery analyzer to analyze the performance of Aluminum-ion battery (12). The results are shown in FIG. 9.

Example 12

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 2 mg/cm$^2$, and the weight ratio of the nickel to graphite was 7.85. Next, after etching the nickel foam plate which a graphite layer was grown thereon, the weight ratio of the nickel to graphite was reduced from 7.85 to 2.67 (i.e. 66% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride ($AlCl_3$) and 1-ethyl-3-methylimidazolium chloride ([EMIm]Cl, wherein the molar ratio between $AlCl_3$ and [EMIm] Cl was about 1.3) was injected into the aluminum plastic pouch, obtaining Aluminum-ion battery (13).

Next, Aluminum-ion battery (13) of Example 12 was analyzed by a NEWARE battery analyzer to analyze the performance of Aluminum-ion battery (13). The results are shown in FIG. 9.

Example 13

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 2 mg/cm$^2$, and the weight ratio of the nickel to graphite was 7.64. Next, after etching the nickel foam plate which a graphite layer was grown thereon, the weight ratio of the nickel to graphite was reduced from 7.64 to 1.3 (i.e. 83% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm]Cl was about 1.3) was injected into the aluminum plastic pouch, obtaining Aluminum-ion battery (14).

Next, Aluminum-ion battery (14) of Example 13 was analyzed by a NEWARE battery analyzer to analyze the performance of Aluminum-ion battery (14). The results are shown in FIG. 9.

Example 14

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.53 mg/cm$^2$, and the weight ratio of the nickel to graphite was 10, obtaining the graphite electrode (no etching process was performed).

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm]Cl was about 1.3) was injected into the aluminum plastic pouch, obtaining Aluminum-ion battery (15).

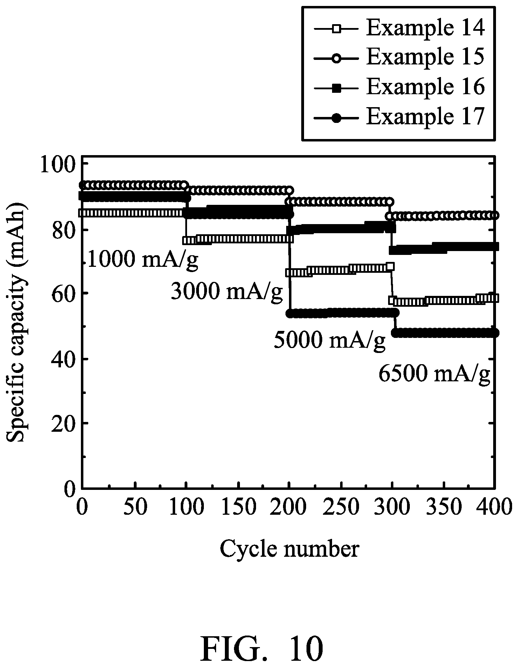

Next, Aluminum-ion battery (15) of Example 14 was analyzed at charging/discharging current densities of about 1000 mA/g, 3000mA/g, and 5000mA/g by a NEWARE battery analyzer to analyze the performance of Aluminum-ion battery (15). The results are shown in FIG. 10.

Example 15

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.53 mg/cm$^2$, and the weight ratio of the nickel to graphite was 10.21. Next, after etching the nickel foam plate which a graphite layer was grown thereon, the weight ratio of the nickel to graphite was reduced from 10.21 to 4.9 (i.e. 52% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm]Cl was about 1.3) was injected into the aluminum plastic pouch, obtaining Aluminum-ion battery (16).

Next, Aluminum-ion battery (16) of Example 15 was analyzed by a NEWARE battery analyzer to analyze the performance of Aluminum-ion battery (16). The results are shown in FIG. 10.

Example 16

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.53 mg/cm$^2$, and the weight ratio of the nickel to graphite was 9.64. Next, after etching the nickel foam plate which a graphite layer was grown thereon, the weight ratio of the nickel to graphite was reduced from 9.64 to 2.7 (i.e. 72% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm] Cl was about 1.3) was injected into the aluminum plastic pouch, obtaining Aluminum-ion battery (17).

Next, Aluminum-ion battery (17) of Example 16 was analyzed by a NEWARE battery analyzer to analyze the performance of Aluminum-ion battery (17). The results are shown in FIG. 10.

Example 17

A nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.53 mg/cm$^2$, and the weight ratio of the nickel to graphite was 10. Next, after etching the nickel foam plate which a graphite layer was grown thereon, the weight ratio of the nickel to graphite was reduced from 10 to 1.6 (i.e. 84% of nickel was removed), obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm] Cl was about 1.3) was injected into the aluminum plastic pouch, obtaining Aluminum-ion battery (18).

Next, Aluminum-ion battery (18) of Example 17 was analyzed by a NEWARE battery analyzer to analyze the performance of Aluminum-ion battery (18). The results are shown in FIG. 10.

As shown in FIGs. 9 and 10, when the graphite amount per unit area was greater than about 1.5 mg/cm$^2$, the electrolyte can contact the graphite via the voids after etching a part of the nickel foam plate, thereby facilitating the infiltration of electrolyte into the graphite.

Example 18

First, a nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.78 mg/cm$^2$, and the weight ratio of the nickel to graphite was 8.58. Next, after cooling to room temperature, the nickel foam plate, which a graphite layer was grown thereon, was immersed into an etching solution (ferric chloride aqueous solution with a concentration of 5%) to etch the nickel foam plate in order to remove a part of nickel of the nickel foam plate to form voids. The time period of the etching process was controlled until the weight ratio of the nickel to graphite was 1.63 (i.e. about 81% of nickel was removed). Finally, the result was washed with deionized water to remove the residual etching solution and then dried at 80°C to remove deionized water, obtaining the graphite electrode.

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride (AlCl$_3$) and 1-ethyl-3-methylimidazolium chloride ([EMIm]Cl, wherein the molar ratio between AlCl$_3$ and [EMIm] Cl was about 1.3) was injected into the aluminum plastic pouch, obtaining Aluminum-ion battery (19).

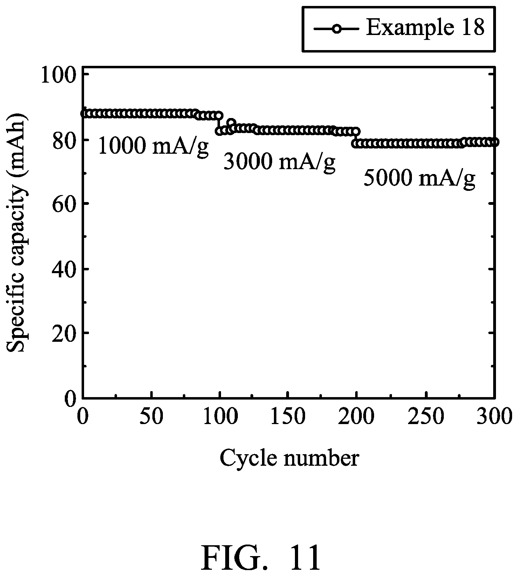

Next, Aluminum-ion battery (19) of Example 18 was analyzed at charging/discharging current densities of about 1000 mA/g, 3000mA/g, and 5000mA/g by a NEWARE battery analyzer to analyze the performance of Aluminum-ion battery (19). The results are shown in FIG. 11.

As shown in FIG. 11, when the graphite amount per unit area was greater than about 1.7 mg/cm$^2$, the electrode, after removing 81% of metal, can still exhibit superior electrical conductivity, and the battery employing the electrode can exhibit high specific capacity at high charging/discharging current densities.

Example 19

First, a nickel foam plate (having a size of 70mm x 70mm, a thickness of 0.2mm, and a porosity of 90%) was provided. Next, the nickel foam plate was disposed into a vacuum muffle furnace to promote the growth of graphite at 900°C-1100°C, and methane was introduced into the vacuum muffle furnace with argon gas and hydrogen gas as carrier gas. The graphite amount per unit area was controlled to be about 1.42 mg/cm$^2$, and the weight ratio of the nickel to graphite was 10.7, obtaining the graphite electrode (no etching process was performed).

Next, an aluminum foil (with a thickness of 0.03mm, manufactured by Alfa Aesar) was cut to obtain the aluminum electrode (having a size of 70mm x 70mm). Next, separators (of glass filter paper (two layers), with trade No. Whatman) were provided. Next, the aluminum electrode, the separator, the graphite electrode, the separator, and the aluminum electrode were placed in sequence and sealed within an aluminum plastic pouch. Next, an electrolyte (including aluminum chloride ($AlCl_3$) and 1-ethyl-3-methylimidazolium chloride ([EMIm]Cl, wherein the molar ratio between $AlCl_3$ and [EMIm]Cl was about 1.3) was injected into the aluminum plastic pouch, obtaining Aluminum-ion battery (20).

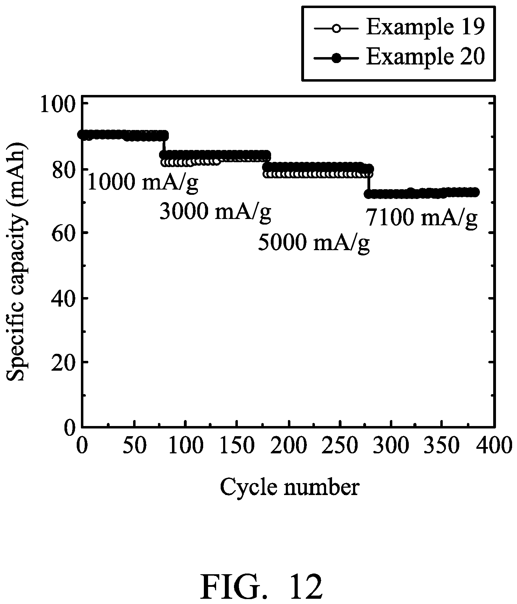

Next, Aluminum-ion battery (20) of Example 19 was analyzed at charging/discharging current densities of about 1000 mA/g, 3000mA/g, and 5000mA/g by a NEWARE battery analyzer to analyze the performance of Aluminum-ion battery (20). The results are shown in FIG. 12.

Example 20

Example 20 was performed in the same manner as Example 19 except that the graphite electrode was further etched resulting in that the weight ratio of the nickel to graphite was reduced from 10.7 to 4.75 (i.e. 56% of nickel was removed), obtaining Aluminum-ion battery (21).

Next, Aluminum-ion battery (21) of Example 20 was analyzed by a NEWARE battery analyzer to analyze the performance of Aluminum-ion battery (21). The results are shown in FIG. 12.

As shown in FIG. 12, when the graphite amount per unit area was less than about 1.5 mg/cm$^2$, a non-continuous graphite layer was formed on the nickel foam plate due to the low amount of grown graphite. In this condition, the performance of batteries would not be enhanced obviously through further removing a part of the nickel foam plate.

It will be clear that various modifications and variations can be made to the disclosed methods and materials. It is intended that the specification and examples be considered as exemplary only, with the true scope of the disclosure being indicated by the following claims.

**Claims**

1. An electrode, comprising:

   a metal network structure; and
   a hollow active material network structure, wherein the metal network structure is disposed in the hollow active material network structure, wherein the weight ratio of the metal network structure to the hollow active material network structure is from 0.5 to 155.

2. The electrode as claimed in Claim 1, wherein the metal network structure is a metal foam.

3. The electrode as claimed in Claim 2, wherein the metal foam is nickel foam, iron foam, copper foam, titanium foam, cobalt foam, or an alloy foam thereof.

4. The electrode as claimed in one of Claims 1, 2 and 3, wherein the hollow active material network structure is graphite, or layered active layer.

5. The electrode as claimed in one of Claims 1, 2, 3 and 4, wherein the thickness of the electrode is from 100nm to 10mm.

6. The electrode as claimed in one of Claims 1, 2, 3, 4 and 5, wherein the hollow active material network structure is a continuous structure.

7. The electrode as claimed in one of Claims 1, 2, 3, 4 and 5, wherein the hollow active material network structure is a non-continuous structure.

8. The electrode as claimed in one of Claims 1, 2, 3, 4, 5 and 7, wherein the area ratio of the surface, which is covered by the hollow active material network structure, of the metal network structure to the whole surface of the metal network structure is 0.01 to 0.95.

9. The electrode as claimed in one of Claims 1, 2, 3, 4, 5, 6, 7 and 8, further comprising a plurality of voids disposed in the hollow active material network structure.

10. The electrode as claimed in Claim 9, wherein the volume ratio of the voids to the metal network structure is from 99 to 1.

11. A method for fabricating an electrode, comprising:

     providing a metal network structure; and
     depositing an active material on the surface of the metal network structure, obtaining the electrode, wherein the weight ratio of the metal network structure and the hollow active material network structure is from 0.5 to 155.

12. The method as claimed in Claim 11, further comprising:
     subjecting the electrode to a wet etching to remove a part of the metal network structure, forming a plurality of voids.

13. A device, includes:

     a first electrode, wherein the first electrode is the electrode as claimed in one of Claims 1, 2, 3, 4, 5, 6, 7, 8, 9 and 10;
     a first separator;
     a second electrode, wherein the first electrode is separated from the second electrode by the first separator; and
     an electrolyte disposed between the first electrode and the second electrode.

14. The device as claimed in Claim 13, wherein the electrolyte comprises an ionic liquid and a metal halide, wherein the ionic liquid is choline chloride, ethylchlorine chloride, alkali halide, alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof.

15. The device as claimed in Claim 13, wherein the electrolyte comprises a solution and a metal halide, wherein the solution is urea, N-methylurea, dimethyl sulfoxide, methylsulfonylmethane, or a combination thereof.

16. The device as claimed in one of Claims 13, 14 and 15, further comprising a third electrode and a second separator, wherein the first electrode is separated from the third electrode by the second separator.

FIG. 1

FIG. 2

FIG. 3

2

14

13

12

15

## FIG. 4

50

| Providing a metal network structure | 52 |

↓

| Forming an active material on the surface of the metal network structure | 54 |

↓

| Performing a wet etching to remove a part of the metal network structure to form a plurality of voids | 56 |

## FIG. 5

FIG. 6

FIG. 7

FIG. 8

FIG. 9

FIG. 10

FIG. 11

FIG. 12

Europäisches
Patentamt

European
Patent Office

Office européen
des brevets

## EUROPEAN SEARCH REPORT

Application Number

EP 18 19 6866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/303000 A1 (OKUNO KAZUKI [JP] ET AL) 22 October 2015 (2015-10-22) <br> * paragraph [0087] * <br> * paragraph [0091] - paragraph [0092] * <br> * paragraph [0143] * <br> * paragraph [0146] * <br> * paragraph [0149] * <br> * claims 3, 4 * <br> * claim 6 * | 1-6,11 | INV. <br> H01M4/04 <br> H01M4/134 <br> H01M4/1395 <br> H01M4/36 <br> H01M4/52 <br> H01M4/583 |
| X,P | EP 3 301 742 A1 (IND TECH RES INST [TW]) 4 April 2018 (2018-04-04) <br> * paragraph [0011] * <br> * paragraph [0012] * <br> * paragraph [0013] * <br> * paragraph [0016] * <br> * paragraph [0017] * <br> * paragraph [0037] * <br> * paragraph [0036] * <br> * claim 3 * <br> * claims 5,6 * | 1-6,8,9, 11 | |
| X | US 2013/319870 A1 (CHEN GUORONG [US] ET AL) 5 December 2013 (2013-12-05) <br> * paragraph [0137] * <br> * paragraph [0100] * | 1-5,11 | TECHNICAL FIELDS SEARCHED (IPC) <br><br> H01M |
| A | US 2012/070741 A1 (LIU ZUQIN [US] ET AL) 22 March 2012 (2012-03-22) <br> * the whole document * | 1-16 | |

The present search report has been drawn up for all claims

| Place of search | Date of completion of the search | Examiner |
|---|---|---|
| Munich | 18 February 2019 | Huber, Gerrit |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 6866

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2019

| Patent document cited in search report | | | Publication date | Patent family member(s) | | | Publication date |
|---|---|---|---|---|---|---|---|
| US 2015303000 | A1 | | 22-10-2015 | BR | 112014007660 | A2 | 11-04-2017 |
| | | | | CN | 103858195 | A | 11-06-2014 |
| | | | | DE | 112012004286 | T5 | 31-07-2014 |
| | | | | JP | WO2013054710 | A1 | 30-03-2015 |
| | | | | KR | 20140073492 | A | 16-06-2014 |
| | | | | US | 2015303000 | A1 | 22-10-2015 |
| | | | | WO | 2013054710 | A1 | 18-04-2013 |
| EP 3301742 | A1 | | 04-04-2018 | CN | 107895774 | A | 10-04-2018 |
| | | | | EP | 3301742 | A1 | 04-04-2018 |
| | | | | TW | 201814939 | A | 16-04-2018 |
| | | | | US | 2018097236 | A1 | 05-04-2018 |
| US 2013319870 | A1 | | 05-12-2013 | NONE | | | |
| US 2012070741 | A1 | | 22-03-2012 | US | 2012070741 | A1 | 22-03-2012 |
| | | | | US | 2018090755 | A1 | 29-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 106133111